# EUROPEAN PATENT SPECIFICATION

(11) **EP 4 081 829 B1**
(45) Date of publication and mention of the grant of the patent: **25.11.2026**
(21) Application number: 20905356.0
(22) Date of filing: 23.12.2020
(51) Int. Cl.: G01S 17/08, G01B 11/02, G01C 3/08, G01S 7/493, G01S 17/32, G01S 17/88, G01B 9/02001, G01B 9/02, G01P 3/36, G01S 17/58, G01S 7/481, G01S 7/499, H04L 27/233

(54) **A LIDAR APPARATUS AND PROCESS**
LIDAR-VORRICHTUNG UND -VERFAHREN
APPAREIL LIDAR ET PROCÉDÉ ASSOCIÉ

(30) Priority: 23.12.2019 AU 2019904904
(43) Date of publication of application: 02.11.2022
(73) Proprietor: Advanced Navigation Pty Ltd., Sydney NSW 2000 (AU)
(72) Inventor: ROBERTS, Lyle Edward, Isabella Plains, Australian Capital Territory (AU); SPOLLARD, James Thomas, Isabella Plains, Australian Capital Territory (AU)
(74) Representative: V.O.
(86) International application number: PCT/AU2020/051427
(87) International publication number: WO 2021/127740

(56) References cited:
- WO-A1-2017/216581
- WO-A2-2019/038542
- US-A- 5 835 199
- US-A1- 2003 137 647
- US-A1- 2009 046 289
- US-A1- 2009 059 201
- US-A1- 2017 329 013
- US-A1- 2018 224 547
- US-A1- 2019 011 558
- US-A1- 2019 011 558
- US-B1- 6 580 497

## Description

### TECHNICAL FIELD

The present invention relates to LiDAR (Light detection and Ranging) technology, and in particular to a LiDAR apparatus and process for measuring distance and velocity.

### BACKGROUND

Most commercial LiDAR sensors use pulsed lasers to measure distance by timing how long it takes for a short pulse of light to scatter off a distant object and return to the sensor. Pulsed LiDAR has been sold commercially for decades due to its technological maturity, but suffers from several disadvantages in the context of autonomous vehicle applications. First, pulsed LiDAR sensors cannot measure velocity directly. Second, because they are sensitive to the intensity of the light they receive, they are highly susceptible to interference from other sources of light such as the sun and other LiDAR sensors. This susceptibility to interference also makes it difficult for them to perform consistently in the presence of dust, fog and snow, having a marked impact on reliability. Finally, pulsed LiDAR sensors do not readily adapt to dynamic operating conditions.

An emerging type of LiDAR technology, referred to as frequency modulated continuous wave (FMCW) LiDAR, aims to improve performance in autonomous vehicle applications by measuring more than just the intensity of the received light. In contrast to pulsed LiDAR, FMCW LiDAR is sensitive to both the intensity *and* the frequency of received light. This makes FMCW LiDAR sensitive to changes in frequency due to Doppler shifting of the scattered laser beam, enabling it to measure the radial velocity of an object relative to the sensor. Accordingly, FMCW LiDAR is capable of measuring range and velocity at the same time. But whilst the ability of FMCW sensors to measure velocity provides a distinct advantage over pulsed LiDAR sensors, they are still susceptible to interference from other LiDAR sensors. FMCW LiDAR is also more expensive than pulsed LiDAR due to the need for more sensitive, specialised optics and electronics.

It is desired to provide a LiDAR apparatus and process that alleviate one or more difficulties of the prior art, or to at least provide a useful alternative.

US2019011558 discloses Doppler correction of broadband LIDAR includes mixing, during a first time interval, a returned optical signal with an in-phase version of the transmitted signal to produce a first mixed optical signal that is detected during the first time interval to produce a first electrical signal. During a non-overlapping second time interval the returned optical signal is mixed with a quadrature version of the transmitted signal to produce a second mixed optical signal that is detected during the second time interval to produce a second electrical signal. A complex digital signal uses one of the digitized electrical signals as a real part and a different one as the imaginary part. A signed Doppler frequency shift of the returned optical signal is determined based, at least in part, on a Fourier transform of the complex digital signal.

WO2017216581 discloses a method for determining range and velocity information for a collection of moving scatterers comprises frequency modulating and/or phase modulating continuous wave light to form a modulated signal beam. The method comprises transmitting the modulated signal beam to the collection of scatterers, detecting light back-scattered by the collection of scatterers, and analysing the detected signal using a matched filter to provide range and velocity information for the collection of scatterers. The scatterers may comprise atmospheric aerosols. The system may be used to provide a measure of wind speed and/or a measure of air turbulence.

WO2019038542 discloses a system is provided for determining the position of a mobile receiver unit in an environment. The system comprises a plurality of transmitter units which transmit a respective phase-modulated transmitter-unit identifier, a mobile receiver unit, arranged to receive a signal from a transmitter unit, and a processing subsystem. The processing subsystem is configured to sample received signals to generate sampled data, wherein the identifier spans a transmitter- unit-identifier-bearing portion of the sampled data, obtain template data corresponding to the identifier, analyse the sampled data to determine a Doppler-induced phase deviation, adjust the template or the sampled data to change one or more phase shifts by an amount depending on the determined deviation, cross-correlate the template with the sampled data, determine a time-of-arrival of the signal, decode the identifier from the sampled data, and use the time-of-arrival and the decoded identifier to determine information relating to the position of the mobile receiver unit.

### SUMMARY

In accordance with the present invention, there is provided a LiDAR process executed by a signal processing component of a LiDAR apparatus, including:
receiving LiDAR signal data representing a signal received at an optical receiver of a LiDAR apparatus and including a scattered and/or reflected portion of an optical signal transmitted by an optical transmitter of the LiDAR apparatus and encoded with a known digital signal, the scattered and/or reflected portion of the transmitted optical signal having been scattered or reflected from an object spaced from the LiDAR apparatus by a distance, and having a Doppler shifted angular frequency due to radial motion of the object relative to the LiDAR apparatus;
processing the LiDAR signal data to generate corresponding frequency compensated signal data representing a frequency compensated signal corresponding to the received signal, but in which the Doppler shifted angular frequency has been removed and the known digital signal is encoded into the amplitude of the frequency compensated signal; and
correlating the frequency compensated signal with a template of the known digital signal to generate a corresponding measurement of the distance of the object from the LiDAR apparatus; wherein the processing includes:
   (i) processing the LiDAR signal data to generate corresponding second signal data representing a complex-conjugated and time-shifted copy of the received signal; and
   (ii) processing the LiDAR signal data and the second signal data to generate the frequency compensated data by multiplying the received signal by the complex-conjugated and time-shifted copy of the received signal.

In some embodiments, the known digital signal is a maximal-length sequence phase-encoded in the optical signal, and the Doppler-shifted portion of the optical signal is given by: $s \left[{nT}_{s}\right] = {Ae}^{i \left({ωnT}_{s}+\frac{β}{2}c\left[{nT}_{s}\right]+θ\left[{nT}_{s}\right]\right)}$
with amplitude *A*, angular frequency *ω =* 2*πf*, time-varying phase *θ*[*nTₛ*], and *c*[*nTₛ*] is the known digital signal encoded in phase with modulation depth *β*;
the complex-conjugated and time-shifted copy of the received signal is given by: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
where the time-shifted frequency *ωKTₛ* represents a constant phase shift, *ϕ*, relative to the unshifted signal s[n], and wherein the frequency compensated signal is given by: $q \left[{nT}_{s}\right] = {A}^{2} ⋅ c \left[{nT}_{s}\right] ⋅ c \left[\left(n-K\right){T}_{s}\right] ⋅ {e}^{iϕ}$

In some embodiments, the known digital signal is a pseudo-random bit sequence, and the frequency compensated signal is given by: $q \left[{nT}_{s}\right] = {A}^{2} ⋅ c \left[\left(n-M\right){T}_{s}\right] ⋅ {e}^{iϕ}$

In some embodiments, the process includes estimating the Doppler shifted angular frequency *f_{d}* according to: ${f}_{d} = \frac{{ϕF}_{s}}{2 RπK}$ where ${F}_{s} = \frac{1}{{T}_{s}}$ represents the sampling frequency used to generate the LiDAR signal data from the received optical signal.

In some embodiments, the known digital signal is amplitude-encoded in the optical signal, and the processing includes:
i) determining in-phase and quadrature components of the received signal; and
ii) determining the frequency compensated signal as a magnitude of a complex vector corresponding to the in-phase and quadrature components of the received signal.

In some embodiments, the process includes:
encoding an optical signal with the known digital signal;
causing an optical transmitter of the LiDAR apparatus to transmit the encoded optical signal towards the object; and
receiving the signal at an optical receiver of the LiDAR apparatus.

In accordance with some embodiments of the present invention, there is provided a LiDAR apparatus, including:
a laser to generate an optical signal;
an optical modulator to encode the optical signal with a known digital signal;
an optical transmitter to transmit the encoded optical signal towards an object spaced from the LiDAR apparatus by a distance;
an optical receiver to receive a signal including a portion of the transmitted optical signal scattered and/or reflected from the object, the scattered and/or reflected portion of the transmitted optical signal having a Doppler shifted angular frequency due to radial motion of the object relative to the LiDAR apparatus; and
a digital signal processing component configured to:
   receive LiDAR signal data representing the signal received by the optical receiver;
   process the LiDAR signal data to generate corresponding frequency compensated signal data representing a frequency compensated signal corresponding to the received signal, but in which the Doppler shifted angular frequency has been removed and the known digital signal is encoded into the amplitude of the frequency compensated signal; and
   correlate the frequency compensated signal with a template of the known digital signal to generate a corresponding measurement of the distance of the object from the LiDAR apparatus; wherein the processing of the LiDAR signal data includes the steps of:
      (i) processing the LiDAR signal data to generate corresponding second signal data representing a complex-conjugated and time-shifted copy of the received signal; and
      (ii) processing the LiDAR signal data and the second signal data to generate the frequency compensated data by multiplying the received signal by the complex-conjugated and time-shifted copy of the received signal.

In some embodiments, the known digital signal is a maximal-length sequence phase-encoded in the optical signal, and the Doppler-shifted portion of the optical signal is given by: $s \left[{nT}_{s}\right] = {Ae}^{i \left({ωnT}_{s}+\frac{β}{2}c\left[{nT}_{s}\right]+θ\left[{nT}_{s}\right]\right)}$
with amplitude *A*, angular frequency *ω =* 2*πf*, time-varying phase *θ*[*nTₛ*], and *c*[*nTₛ*] is the known digital signal encoded in phase with modulation depth *β*;
the complex-conjugated and time-shifted copy of the received signal is given by: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
where the time-shifted frequency *ωKTₛ* represents a constant phase shift, *ϕ*, relative to the unshifted signal s[n], and wherein the frequency compensated signal is given by: $q \left[{nT}_{s}\right] = {A}^{2} ⋅ c \left[{nT}_{s}\right] ⋅ c \left[\left(n-K\right){T}_{s}\right] ⋅ {e}^{iϕ}$

In some embodiments, the known digital signal is a pseudo-random bit sequence, and the frequency compensated signal is given by: $q \left[{nT}_{s}\right] = {A}^{2} ⋅ c \left[\left(n-M\right){T}_{s}\right] ⋅ {e}^{iϕ}$

In some embodiments, the digital signal processing component is further configured to estimate the Doppler shifted angular frequency *f_{d}* according to: ${f}_{d} = \frac{{ϕF}_{s}}{2 πRK}$ where ${F}_{s} = \frac{1}{{T}_{s}}$ represents the sampling frequency used to generate the LiDAR signal data from the received optical signal.

In some embodiments, the known digital signal is amplitude-encoded in the optical signal, and the processing of the LiDAR signal data includes the steps of:
ii) determining in-phase and quadrature components of the received signal; and
iii) determining the frequency compensated signal as a magnitude of a complex vector corresponding to the in-phase and quadrature components of the received signal.

In some embodiments, the digital signal processing component is further configured to:
cause an optical signal to be encoded with the known digital signal; and
cause the optical transmitter to transmit the encoded optical signal towards the object.

### BRIEF DESCRIPTION OF THE DRAWINGS

Some embodiments of the present invention are hereinafter described, by way of example only, with reference to the accompanying drawings, wherein:
Figures 1 to 5 are schematic diagrams of phase-encoded LiDAR apparatuses in accordance with respective embodiments of the present invention, respectively using:
   Figure 1: complex detection using a 90-degree optical coupler;
   Figure 2: time-separated in-phase/quadrature (I/Q) and Quadrature Phase Shift Keyed (QPSK) detection;
   Figure 3: complex detection using a 120-degree multi-mode interference optical coupler;
   Figure 4: polarization optics to act as an optical circulator; and
   Figure 5: a bi-static telescope;
Figure 6 is a schematic diagram of a LiDAR process executed by a digital signal processor of the apparatus of Figures 1 to 5 to calculate time-of-flight with frequency compensation;
Figure 7 is a schematic diagram of a LiDAR process executed by a digital signal processor of the apparatuses of Figures 2 to 5 to calculate the frequency of the input signal;
Figures 8 and 9 are graphs respectively showing raw and frequency compensated signals in accordance with the LiDAR process of Figure 7, for a stationary object located 3.26 meters from a LiDAR sensor of the LiDAR apparatus;
Figures 10 and 11 are the same as Figures 8 and 9 but for an object moving at 2.5 meters per second and located 3.6 meters from the LiDAR sensor of the LiDAR apparatus;
Figure 12 is a graph of the measured input signal frequency as a function of time, as determined by the process of Figure 7;

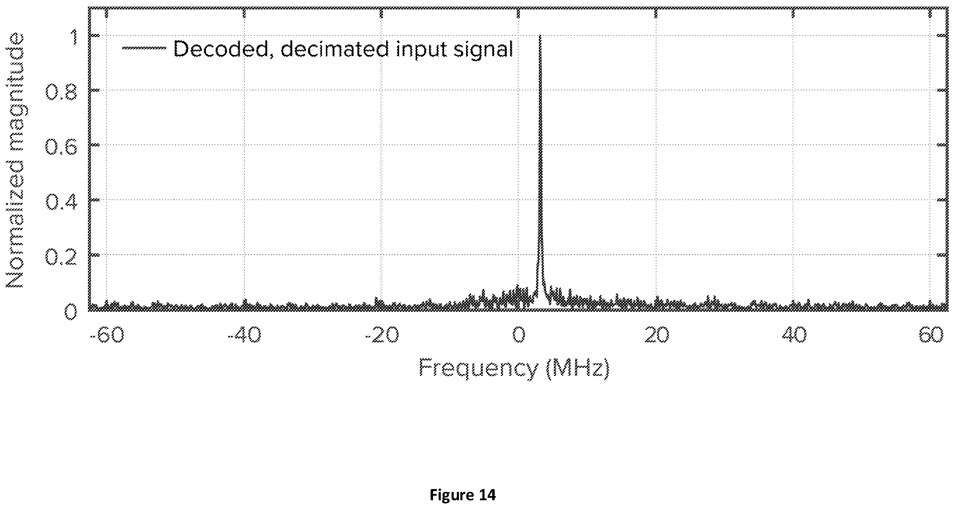

Figures 13 and 14 are respective graphs of the frequency components of raw input signals and decoded input signals based on the computation of a cross-spectrum;
Figure 15 is a schematic diagram of an amplitude-encoded LiDAR system with complex detection, in accordance with an embodiment of the present invention;

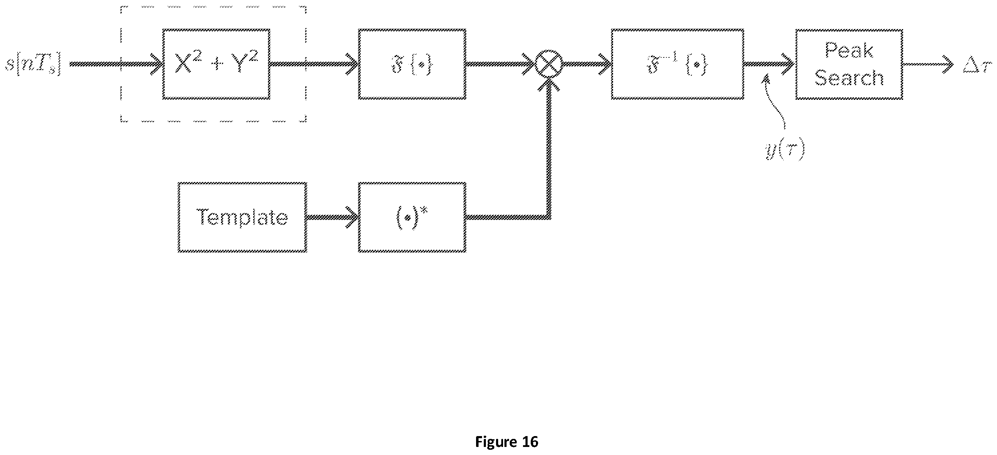

Figure 16 is a schematic diagram of a LiDAR process executed by a digital signal processor of the apparatus of Figure 15 to calculate time-of-flight with frequency compensation;
Figure 17 is a block diagram of a signal processing component of the LiDAR apparatuses; and
Figure 18 includes graphs illustrating the performance of an amplitude-encoded LiDAR process in accordance with an embodiment of the present invention.

### DETAILED DESCRIPTION

Embodiments of the present invention include LiDAR (Light Detection And Ranging) apparatuses and processes that are able to simultaneously and efficiently measure distance and velocity of remote objects, reducing the processing time required to execute safety-critical decisions in autonomous applications. The described LiDAR apparatuses and processes are also immune to interference from other LiDAR sensors operating nearby, which, in the case of autonomous vehicles, will become increasingly critical as the number of autonomous vehicles with LiDAR continues to grow.

The LiDAR apparatuses and processes described herein retain the advantages of existing FMCW systems, whilst providing improved immunity to crosstalk and interference, and the ability to simultaneously measure distance and velocity can be used to prioritise objects based on their movement to improve the safety and reliability of autonomous vehicles.

### optical sub-system

### Phase-Encoded LiDAR

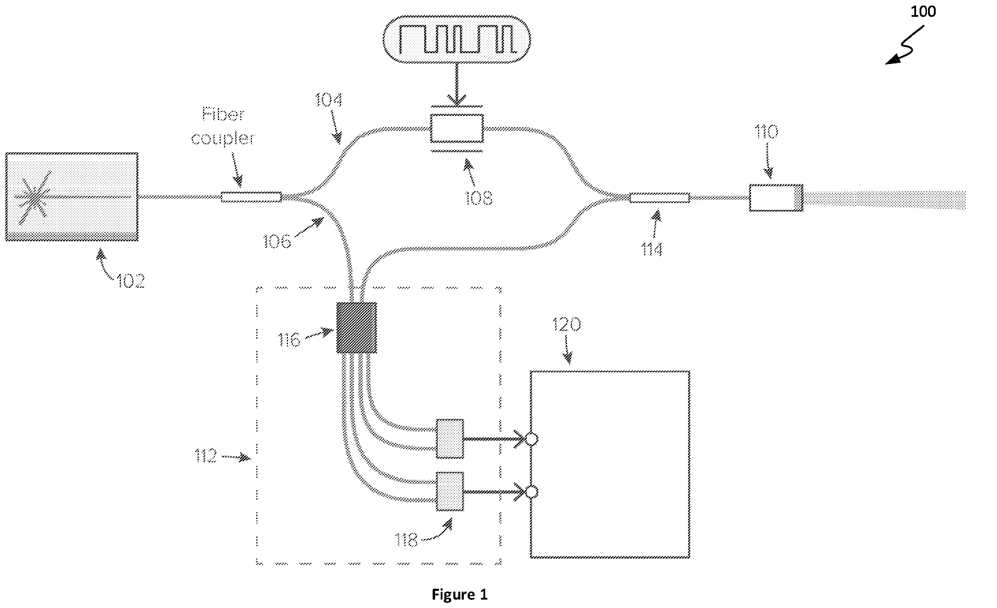

Figures 1 to 5 are schematic diagrams of respective embodiments of a LiDAR apparatus that uses phase-encoding of a digital signal. In the embodiment of Figure 1, a laser 102 generates a coherent beam of light that is divided into two paths 104, 106. An electro-optic modulator ("EOM") 108 is used to encode the phase of the outgoing light with a known digital signal. The resulting modulated light is transmitted from the LiDAR apparatus via a beam expander 110 to illuminate at least part of a remote object (not shown) which scatters and/or reflects a portion of the modulated light back towards an optical receiver 112 of the LiDAR apparatus. (For convenience of description, that portion of light is hereinafter described as being only "scattered" from the object, but the word "scattered" is to be understood broadly and in particular to encompass both scattering and reflection in their more strict technical senses.)

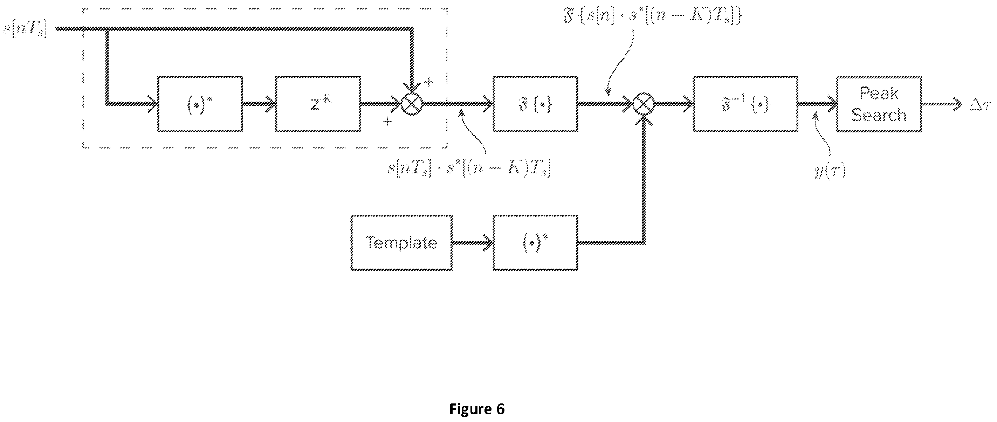

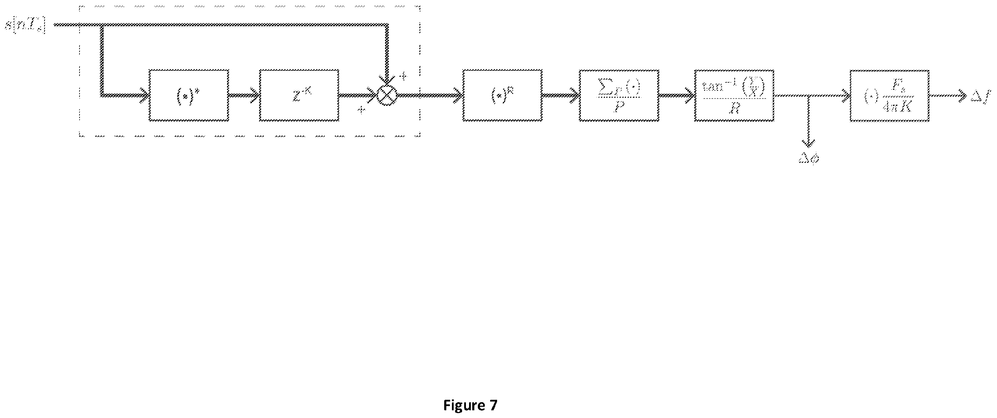

A small portion of the scattered light (an 'echo') is captured and coherently interfered with a local oscillator 106. In the described embodiments, the incoming light is separated from the outgoing light using a fibre optic circulator 114. In some embodiments, a fiber-optic polarization beam splitter is used in place of the fibre-optic circulator 114. The in-phase (I) and quadrature (Q) projections of the received optical signal with respect to the local oscillator are generated; for example, using a 90-degree optical coupler 116, as shown in Figure 1. Two balanced photodetectors 118 are used to convert the electric fields produced by the 90-degree coupler 116 into voltage waveforms. The balanced photodetectors 118 also cancel common-mode noise. The voltage signals generated by the photodetectors 118 are discretely sampled using individual analog-to-digital converters (ADCs). The discrete-time signals generated by the ADCs are referred to collectively herein as LiDAR signal data, and are processed by the signal processing component 120 using digital signal processing, as shown in Figures 6 and 7 and described below.

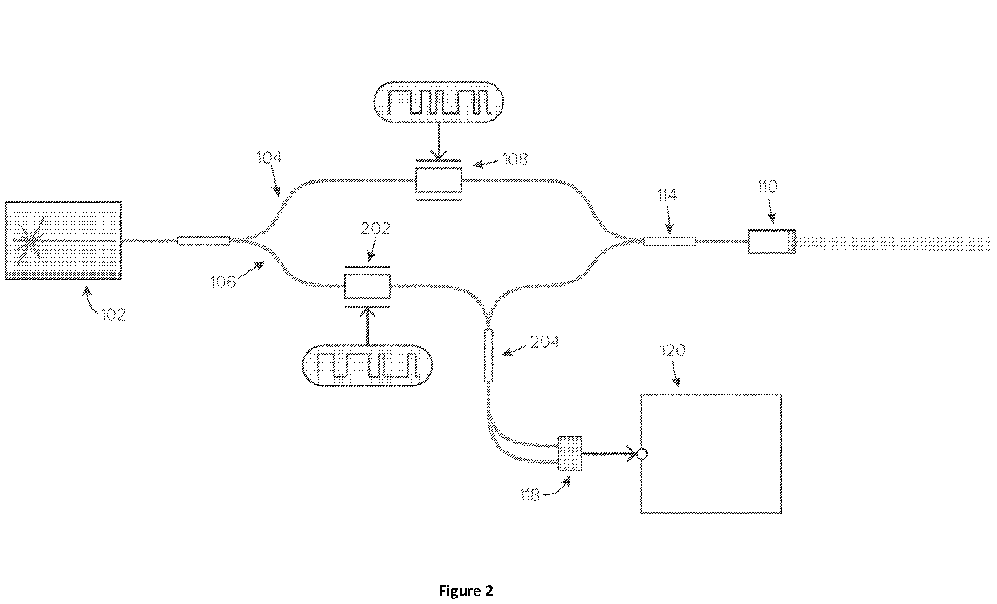

Figure 2 is a schematic diagram of an alternative or 'second' embodiment, in which I and Q projections of the received optical signal are measured using a second electro-optic modulator 202 in the path of the local oscillator 106 to periodically shift its phase between 0 and -*π*/2 radians. Relative to the 'first' embodiment of Figure 1, this embodiment transfers complexity from the optical system into digital signal processing by eliminating the need for a dedicated 90-degree complex coupler 116, instead replacing it with a fibre optic coupler 204 *(e.g.,* in some embodiments a 3dB coupler). In some embodiments, the periodic phase shift from 0 to -*π*/2 radians is combined with the digital signal modulated onto the phase of the outgoing light to produce a four-level QPSK code, eliminating the need for the second electro-optic modulator 202 in the path of the local oscillator altogether.

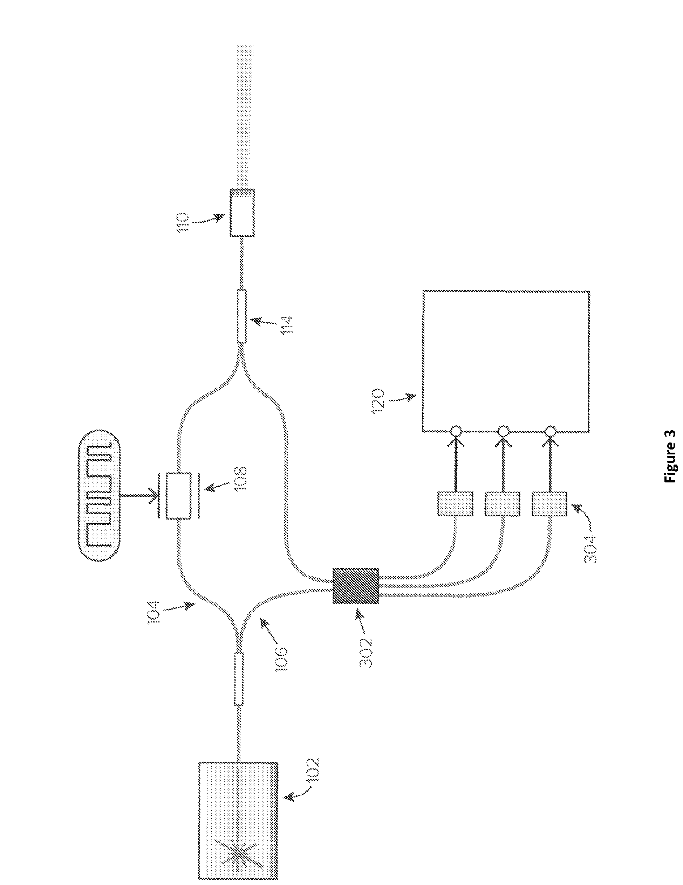

Figure 3 is a schematic diagram of a third embodiment, in which a 120-degree multimode interference coupler 302 is used to generate three projections of the received optical signal relative to the local oscillator, each rotated 120-degrees relative to each other, and thus allowing I and Q to be reconstructed in signal processing. Photodetectors 304 are used to measure the interference of the received signal and local oscillator 106.

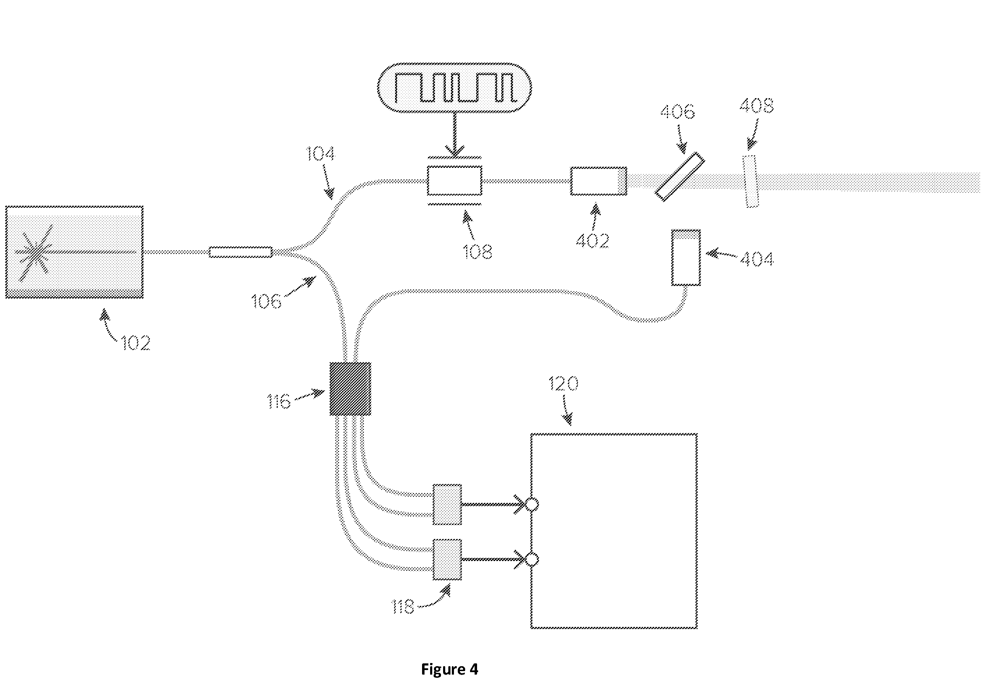

Figure 4 is a schematic diagram of a fourth embodiment, in which two telescopes 402, 404, a polarizing beam splitter (PBS) 406, and quarter-wave plate 408 are used to create a free-space optical circulator in a bi-static arrangement with spatial mode overlap. This is done to prevent retro-reflected light due to internal scattering and Fresnel reflections from interfering with the measurement of the desired signal at the balanced photodetectors 118. In some embodiments, the quarter-wave plate 408 is angled slightly to prevent retro-reflected light from coupling back into the receiving telescope 404. In other embodiments, a partial reflector is placed beyond the quarter-wave plate 408 to generate a prompt back-reflection to serve as a reference for real-time range calibration.

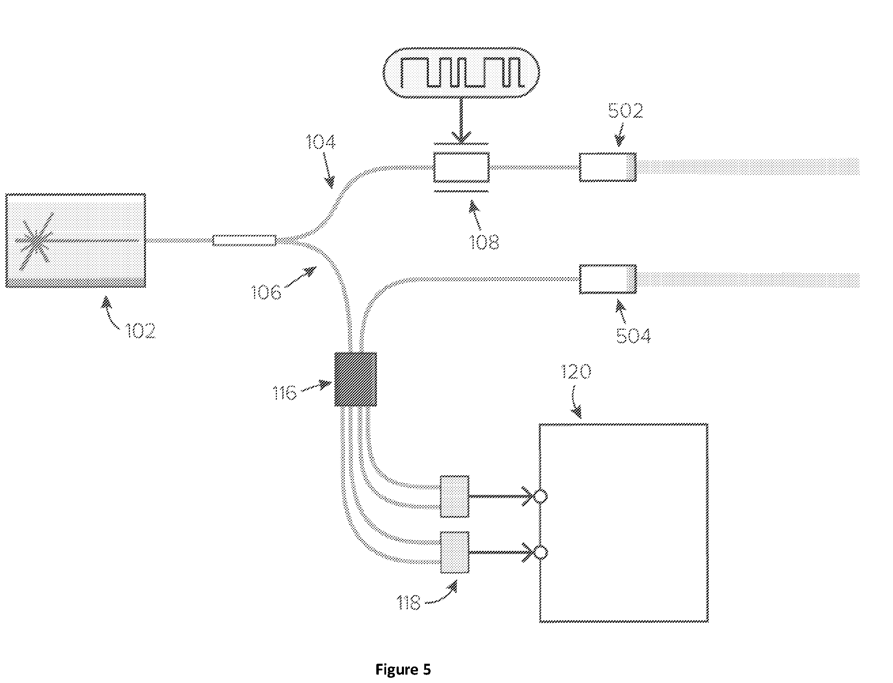

Figure 5 is a schematic diagram of a fifth embodiment, in which two telescopes 502, 504 are positioned in close proximity to each other with spatially separated modes to provide improved immunity to interference caused by internal scattering and Fresnel reflections.

Figures 6 and 7 are block diagrams representing digital signal processing steps performed by the signal processing component 120 of the apparatuses of Figures 1 to 5. The signal processing component 120 executes a LiDAR process, as shown, that enables the simultaneous and independent measurement of an object's instantaneous distance and radial velocity (relative to the LiDAR apparatus). LiDAR requires a time-varying attribute of the light. For amplitude modulated LiDAR sensors, that attribute is intensity. For frequency modulated continuous wave (FMCW) LiDAR it is frequency. In phase-encoded LiDAR, the time varying attribute is phase. In some embodiments, the time-varying attribute is a known digital signal encoded into the phase of the transmitted light.

An object's radial movement relative to the LiDAR apparatus shifts the frequency of the light scattered by the object due to the Doppler effect, with the magnitude of the frequency shift being proportional to the relative radial velocity divided by the wavelength of the transmitted light. As an example, at a laser wavelength of 1550 nm, the Doppler frequency shift caused by a relative velocity of 50 km/h is approximately 18 MHz. The shorter the wavelength, the greater the relative frequency shift due to Doppler for a given radial velocity.

The Doppler shifting of the optical signal frequency poses a challenge because matched-template filtering is used to extract range information. As matched template-filtering relies on a correlation between the received signal and a local *template,* it is important to define the template as accurately as possible, which requires taking the Doppler shifting into account. This can be addressed by correlating the received signal with a range of different templates for respective different radial velocities. This technique works well in a post-processing or 'offline' context, when it is acceptable to compute a series of correlations over an extended period of time. However, for a LiDAR sensor to be useful in an automotive scenario, the signal processing must be capable of measuring range with low latency and with deterministic timing. Unfortunately, the signal processing resources needed to cover a sufficient two-dimensional ("2D") correlation space over both Doppler frequency shift (velocity) and target delay (range) in real-time require a prohibitive amount of parallel signal processing resources. Implementing such brute force approaches in real-time requires extremely powerful processors, which are at this time not cost-effective for automotive LiDAR.

To address this difficulty, the inventors have developed LiDAR processes that avoid the computational burden of correlating the received signal with many templates by removing the (Doppler shifted) angular frequency from the received signal using a frequency compensation process of the LiDAR process, as described below, that is independent of the Doppler shifted angular frequency. To put it another way, as described below the frequency compensation process processes the received signal to generate a corresponding signal, referred to herein as a "frequency compensated" signal, which has no dependence on angular frequency (*i*.*e*., there is no angular frequency term in the expression for the frequency compensated signal), and the processing does not rely on, or have any knowledge of, the Doppler shifted angular frequency of the received signal.

The frequency compensation process determines in-phase and quadrature projections of the received optical signal, and uses them to generate a corresponding complex number. This can be achieved in several ways, including-but not limited to-using a 90-degree optical coupler, a 120-degree optical coupler, optical heterodyne detection, or a quadrature-phase shift keying encoding process, for example.

In the described phase-encoded LiDAR embodiments, the frequency compensation process begins by projecting the input signal to a single point within a stationary reference plane, as follows.

Let the input signal be defined as: $s \left[{nT}_{s}\right] = {Ae}^{i \left({ωnT}_{s}+\frac{β}{2}c\left[{nT}_{s}\right]+θ\left[{nT}_{s}\right]\right)}$ (1) with amplitude *A*, angular frequency *ω =* 2*πf,* time-varying phase *θ*[*nTₛ*]*,* and a known digital signal *c*[*nTₛ*] encoded in phase with modulation depth *β*. The discrete time step, *nTₛ*, is represented by a discrete sample number *n* and a discrete time step (sampling period) *Tₛ*. The first step in the frequency compensation process is to generate a complex conjugated copy of the input signal delayed by *K* samples: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$ (2)

Assuming the angular frequency *ω* and phase are constant over the delay period *K*, Equation (2) can be rewritten as: $\begin{matrix}s * \left[\left(n-K\right){T}_{s}\right] = {Ae}^{- i \left({ωnT}_{s}-{ωKT}_{s}+\frac{β}{2}c\left[\left(n-K\right){T}_{s}\right]+θ\right)} \\ = {Ae}^{- i \left({ωnT}_{s}-ϕ+\frac{β}{2}c\left[\left(n-K\right){T}_{s}\right]+θ\right)}\end{matrix}$ (3) since the time-delayed frequency *ωKTₛ* represents a constant phase shift, *ϕ*, relative to the unshifted signal *s*[*n*]. If, for example, the modulation depth of the phase-encoded pattern is *β* = *π* (i.e., for a binary phase-shift keyed encoding scheme), then Equations (1) and (3) can be represented as: $s \left[{nT}_{s}\right] = A ⋅ c \left[{nT}_{s}\right] ⋅ {e}^{i \left({ωnT}_{s}+θ\right)}$ (4) and: $s * \left[\left(n-K\right){T}_{s}\right] = A ⋅ c \left[\left(n-K\right){T}_{s}\right] ⋅ {e}^{- i \left({ωnT}_{s}-ϕ+θ\right)}$ (5) respectively. The second step in the frequency compensation process is to multiply the unshifted input signal by the conjugated time-delayed copy, as follows: $\begin{matrix}q \left[{nT}_{s}\right] = s \left[{nT}_{s}\right] ⋅ s * \left[\left(n-K\right){T}_{s}\right] = A ⋅ c \left[{nT}_{s}\right] ⋅ {e}^{i \left({ωnT}_{s}+θ\right)} ⋅ A ⋅ c \left[\left(n-K\right){T}_{s}\right] {e}^{- i \left({ωnT}_{s}-ϕ+θ\right)} \\ = {A}^{2} ⋅ c \left[{nT}_{s}\right] ⋅ c \left[\left(n-K\right){T}_{s}\right] ⋅ {e}^{iϕ}\end{matrix}$ (6)

Equation (6) demonstrates the removal of the angular frequency *ω* and phase *θ* from the input signal, whilst preserving information about the digital signal which now appears encoded into the *amplitude* of the resultant frequency compensated signal.

If the digital signal is a maximal-length sequence, then the multiplication of the digital signal with a time-delayed version of itself produces the same digital signal with a fixed sample delay, *M*, relative to the original digital signal: $q \left[{nT}_{s}\right] = {A}^{2} ⋅ c \left[\left(n-M\right){T}_{s}\right] ⋅ {e}^{iϕ}$ (7)

Correlating the frequency compensated signal of Equation (7) with a template of the original digital signal produces a measurement proportional to distance that can be compensated by the constant delay *M*.

The key advantage of the frequency compensation process is that it compensates the effects of Doppler shifting, enabling range to be calculated using a single template, and effectively collapsing a computationally intensive 2D search space into a single correlation calculation.

The frequency compensation process described herein also circumvents the need to measure and correct for a frequency shift on the received signal which, for example, could be accomplished by demodulating the input signal with a reference local oscillator prior to matched-template filtering.

The frequency compensation process also makes it possible to simultaneously estimate the Doppler frequency by recognising that the constant phase shift *ϕ* in *q*[*nTₛ*] is proportional to the total phase excursion due to Doppler shifting in the *K* sample time period, according to: $ϕ = \frac{{f}_{d}}{{F}_{s}} 2 πK$ where ${F}_{s} = \frac{1}{{T}_{s}}$ represents the signal sampling frequency. By measuring *ϕ*, it is therefore possible to estimate the Doppler frequency *f_{d}* according to: ${f}_{d} = \frac{{ϕF}_{s}}{2 πK}$

To calculate *ϕ*, the digital signal *c*[(*n - M*)*Tₛ*] is removed. This can be done by raising *q*[*nTₛ*] to the power of *R*, where *R* represents the number of points in the phase-shift keying (PSK) constellation (*e*.*g*., *R* = 2 for BPSK, and *R* = 4 for QPSK): $\begin{matrix}q {\left[{nT}_{s}\right]}^{R} = {A}^{2 R} ⋅ c {\left[\left(n-M\right){T}_{s}\right]}^{R} ⋅ {e}^{iRϕ} \\ = {A}^{2 R} {e}^{iRϕ}\end{matrix}$

Applying Euler's formula, this result can be separated into its real and imaginary components, as follows: ${e}^{i 2 ϕ} = cos \left(Rϕ\right) + i sin \left(Rϕ\right)$ allowing phase to be extracted using an inverse tangent function: ${tan}^{- 1} \left(\frac{sin \left(Rϕ\right)}{cos \left(Rϕ\right)}\right) = Rϕ$

The Doppler frequency can then be calculated as: ${f}_{d} = \frac{{ϕF}_{s}}{2 πRK}$ (8)

This method of estimating Doppler frequency is, however, limited in the range of frequencies that it can unambiguously resolve, which is given by: $range \left({f}_{d}\right) = \pm \frac{{F}_{s}}{2 RK}$

Alternatively and not forming part of the present invention, the Doppler frequency can also be estimated via cross-spectral analysis of the raw input signal. To improve signal-to-noise ratio of the measured frequency, the raw input signal can be decoded with the digital signal at the correct delay that is measured by the matched-template correlation of the frequency compensated signal.

In summary, the LiDAR process described above for phase-encoded LiDAR collapses a computationally expensive 2D search space into two single 1D search spaces that can be executed simultaneously, improving computational efficiency so that LiDAR range and velocity information can be determined on lower cost, lower power consumption processing hardware.

### Amplitude-Encoded LiDAR

The same improvements in computational efficiency can be achieved for amplitude-encoded LiDAR, in which a time-varying digital signal is encoded into the amplitude of the transmitted light. With a complex measurement of the received signal (*e*.*g*., using a 90-degree coupler), the effects of Doppler are removed by calculating the magnitude of the complex vector produced by the received signal's in-phase and quadrature components. Let the received input signal be: $s \left[{nT}_{s}\right] = A ⋅ \left(1-α c\left[{nT}_{s}\right]\right) ⋅ {e}^{i \left({ωnT}_{s}+θ\right)}$ with amplitude *A*, angular frequency *ω =* 2*πf,* phase *θ*, and a known digital signal *c*[*nTₛ*] ∈ [0,1] encoded in amplitude with modulation depth *α* ∈ [0,1].

The equation *s*[*nTₛ*] can be represented as: $s \left[{nT}_{s}\right] = A ⋅ \left(1-α c\left[{nT}_{s}\right]\right) \left[cos\left({ωnT}_{s}+θ\right)+i sin\left({ωnT}_{s}+θ\right)\right]$

The Doppler frequency shifts can be removed from the signal *s*[*nTₛ*] by summing the squares of its real and imaginary components, as follows: $Re {\left[s\left[{nT}_{s}\right]\right]}^{2} + Im {\left[s\left[{nT}_{s}\right]\right]}^{2} = {A}^{2} ⋅ {\left(1-α c\left[{nT}_{s}\right]\right)}^{2}$

Alternatively, multiplying *s*[*nTₛ*] by its complex conjugate is equivalent to calculating its magnitude squared: $s \left[{nT}_{s}\right] ⋅ s * \left[{nT}_{s}\right] = {A}^{2} ⋅ {\left(1-α c\left[{nT}_{s}\right]\right)}^{2}$

The frequency compensated signal represents only the time-varying pattern which can be correlated with a single template to calculate distance. Velocity can be extracted via cross-spectral analysis of the original received signal by calculating, for example, the complex FFT (Fast Fourier Transform) of the input signal *s*[*nTₛ*]*,* and finding the frequency of the highest magnitude peak in the FFT spectrum.

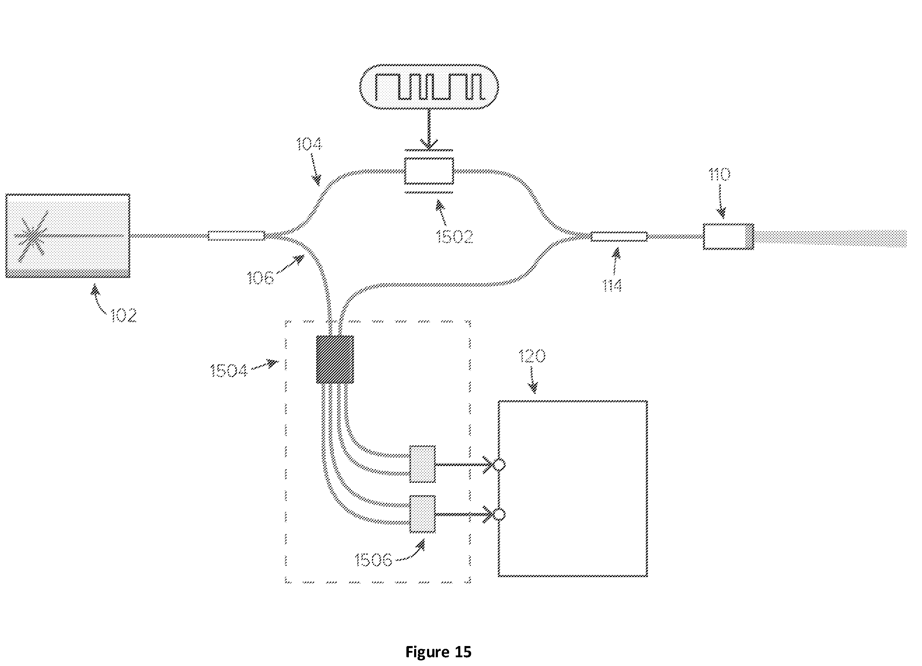

Figure 15 illustrates an embodiment of the optical system of an amplitude-modulated LiDAR system. An electro-optic amplitude modulator 1502 is used to encode a digital signal onto the amplitude of the light. In the described embodiments, the electro-optic modulator 1502 is a Mach-Zehnder modulator with bias control. However, it will be apparent to those skilled in the art that the electro-optic amplitude modulator 1502 may be implemented by other types of modulator in other embodiments. A dual-quadrature detector 1504 is used to measure the in-phase and quadrature states of the received light relative to a reference local oscillator at two balanced photodetectors 1506.

### Signal processing component (electronic sub-system)

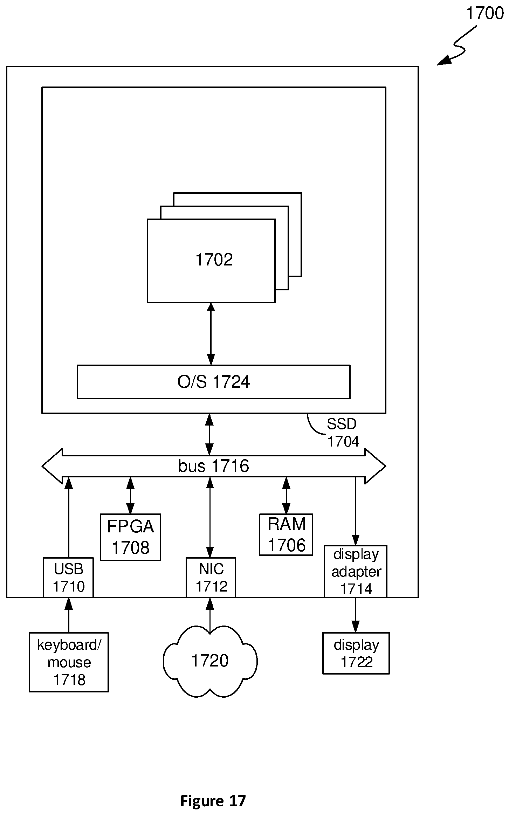

In the described embodiments, the LiDAR processes are implemented in the form of configuration data of a field-programmable gate array (FPGA) 1702 stored on a nonvolatile storage medium 1704 such as a solid-state memory drive (SSD) or hard disk drive (HDD) of a signal processing component 1700 of the corresponding LiDAR apparatus, as shown in Figure 17. However, it will be apparent to those skilled in the art that at least parts of the LiDAR processes can alternatively be implemented in other forms, for example as executable instructions of software components or modules executed by at least one microprocessor and/or by graphics processing units (GPUs), and/or as one or more dedicated hardware components, such as application-specific integrated circuits (ASICs), or any combination of these forms.

The signal processing component 1700 also includes random access memory (RAM) 1706, at least one FPGA (or processor, as the case may be) 1708, and external interfaces 1710, 1712, 1714, all interconnected by at least one bus 1716. The external interfaces may include a network interface connector (NIC) 1712 to connect the LiDAR apparatus to a communications network, and may include universal serial bus (USB) interfaces 1710, at least one of which may be connected to a keyboard 1718 and a pointing device such as a mouse 1719, and a display adapter 1714, which may be connected to a display device such as a panel display 1722. The signal processing component 1700 also includes an operating system 1724 such as Linux or Microsoft Windows.

### EXAMPLE

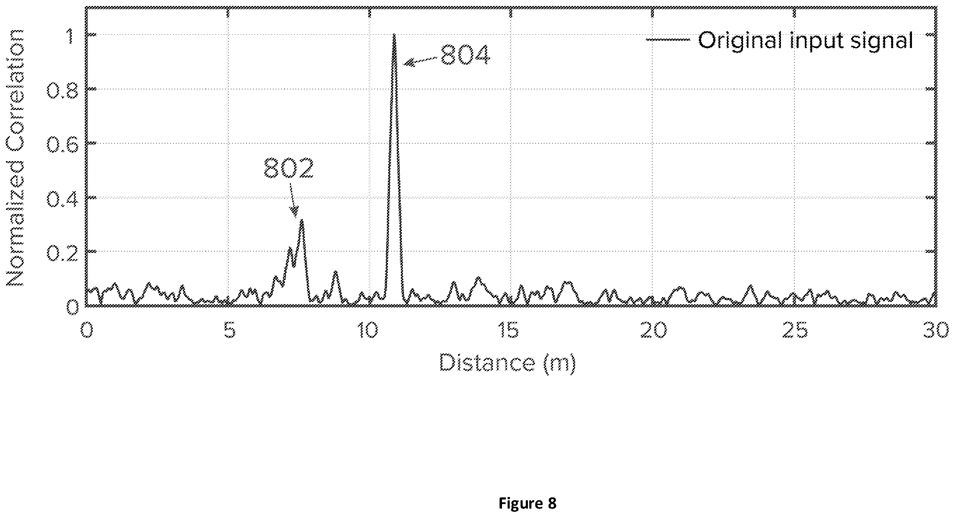

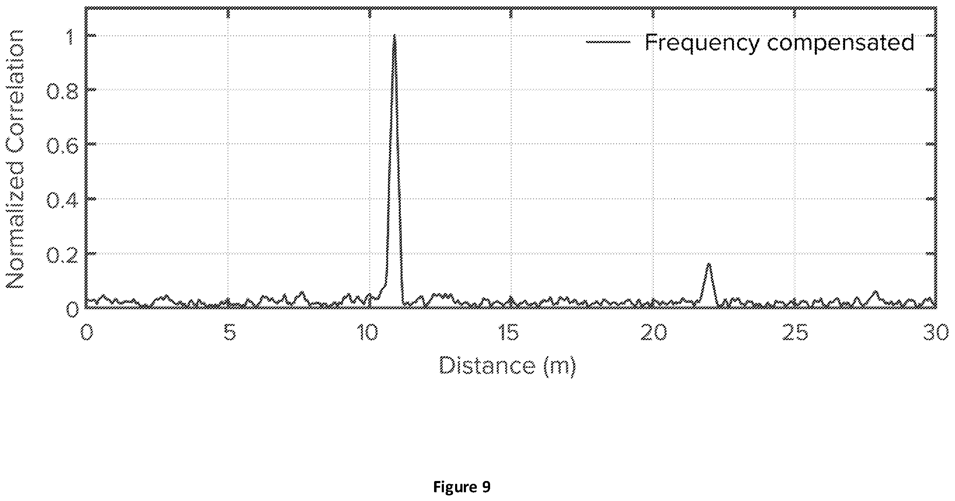

A phase-encoded LiDAR apparatus and process as described above and shown in Figure 4 were applied to measure the range and relative radial velocities of an 80% reflective Lambertian surface, using two separate optical telescopes 402, 404 as the transmit and receiving optical elements in a bistatic configuration as shown in Figure 4. Figures 8 and 9 illustrate the performance of the frequency compensation process when the object was stationary (*i*.*e*., with a relative velocity of 0 km/h) and located at an actual distance of 12.26 meters relative to the telescopes 402, 404. Specifically, Figures 8 and 9 respectively show matched template filtering results of the raw input signal with no Doppler cancellation processing, and with Doppler frequency compensation. Reflections 802 from the free-space circulator optics (*i*.*e*., polarizing beam splitter 406 and quarter-wave plate 408) are visible in Figure 8 at an apparent range of 7.61 m. The echo 804 from the distant object is visible at an apparent range of 10.87 m. The prompt reflection 802 can serve as a reference from which to resolve the actual distance between the sensor and object (in this example 3.26 m), providing real-time calibration of range. Figure 9 shows the same measurement with frequency compensation process applied. Because there is no Doppler component in this example due to the object being stationary, the result reveals a slight improvement in signal-to-noise ratio associated with the frequency compensation process which also compensates for correlated phase noise between the received in-phase and quadrature signals.

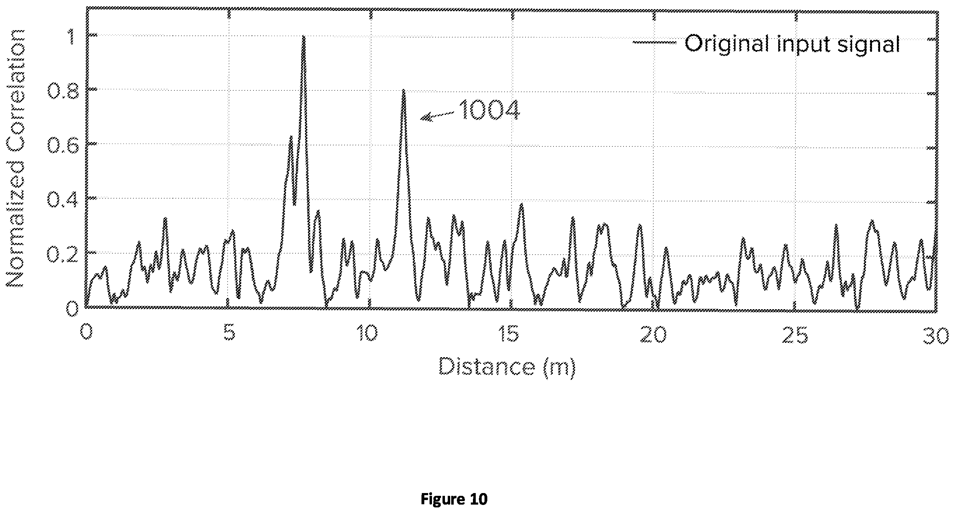

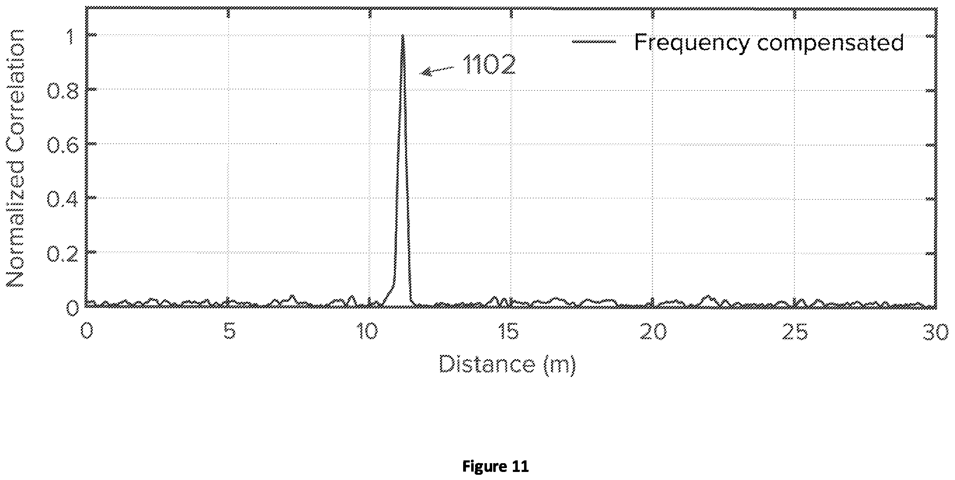

Figures 10 and 11 show corresponding matched template filtering results for the object moving at approximately 2.5 meters per second and located between 3 and 4 meters from the telescope 402 on a linear translation stage: a) without frequency compensation (Figure 10); and b) with frequency compensation (Figure 11). The prompt reflection from the free-space circulator optics is visible in Figure 10 as a small peak 1002 located at an apparent range of 7.61 m. The echo 1004 from the moving object at a distance of approximately 3.6 m is barely visible because the matched filter does not take into account the echo's Doppler shift of 3.23 MHz. Figure 11 shows the measurement of distance with frequency compensation. With frequency compensation, the range of the moving object can be resolved as a peak 1102 located at an apparent range of 11.17 meters, which when referenced to the prompt reflection peak 1002 at 7.61 meters corresponds to a self-calibrated range of 3.56 meters, which agrees with the estimated distance of the moving object at the point of measurement.

In a further example, an amplitude-encoded LiDAR apparatus and process as described above were applied to measure the range and frequency offset of a 40% reflective Lambertian surface using a single 'mono-static' telescope arrangement as shown in Figure 1. The Lambertian target was located approximately 8.4 meters from the telescope. An optical circulator with a high return loss was used to minimise the magnitude of prompt reflections due to leakage through the circulator and Fresnel reflection from the end of the optical fibre and telescope optics.

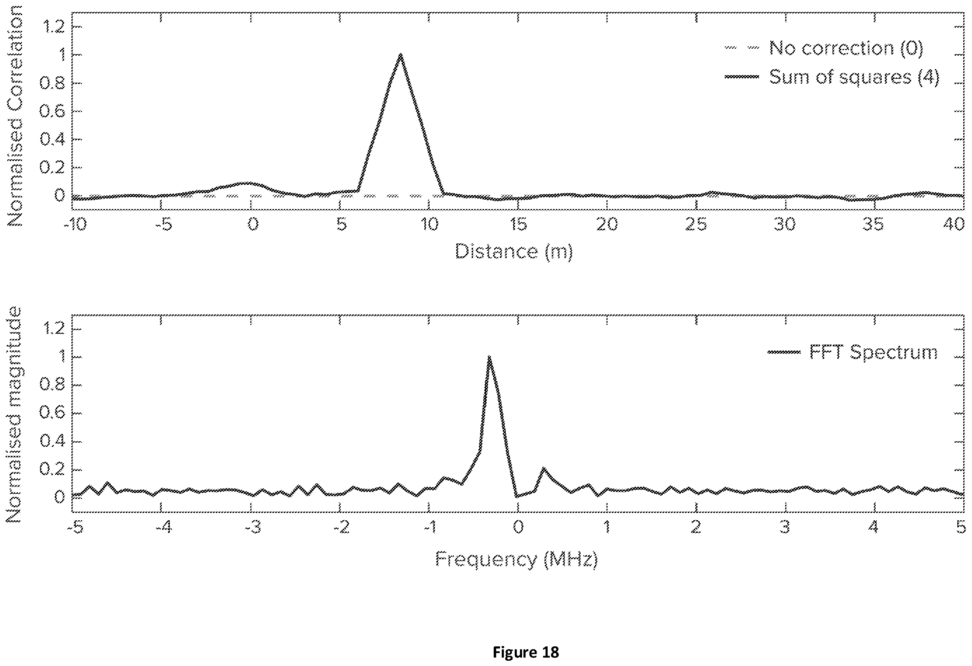

Figure 18 illustrates the performance of the amplitude-encoded LiDAR sensor with a frequency offset of -158.48 kHz, successfully ranging to a 40% Lambertian surface located approximately 8.4 meters from the telescope. Prompt reflections caused by Fresnel reflections from the telescope optics and leakage through the optical circulator are visible as a small peak 1802 located at a distance of 0 meters. The target is clearly visible when the sum-of-squares frequency compensation technique described above is applied as shown in the top graph. Without the sum-of-squares frequency correction, the target distance is not resolved.

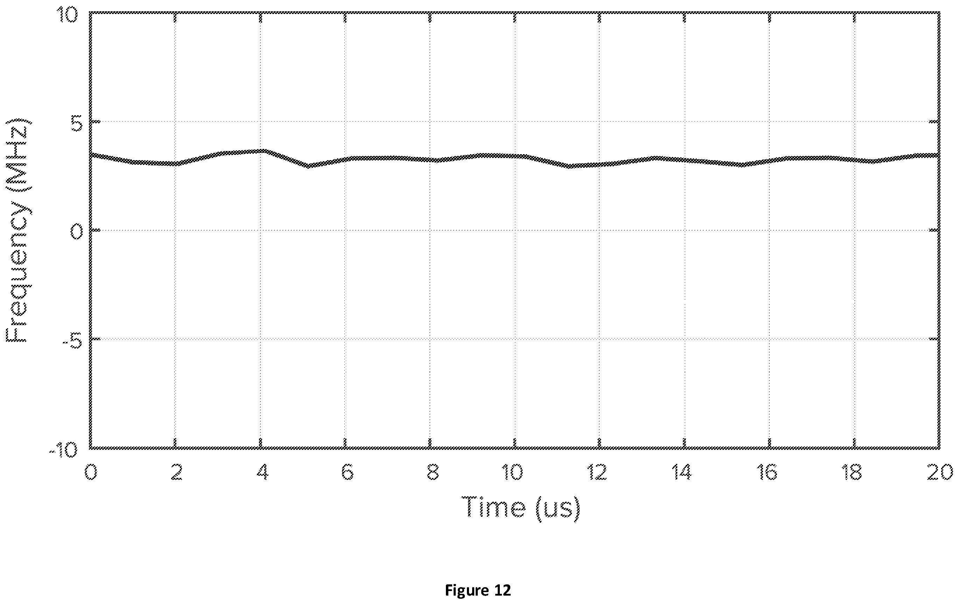

Figure 12 shows the measurement of the input signal frequency using the frequency estimation process described in Figure 7. The range of frequencies measured over a 10 us period was approximately 2.65 MHz to 3.7 MHz, corresponding to an estimated radial velocity in that 10 second period between 2.06 m/s and 2.86 m/s.

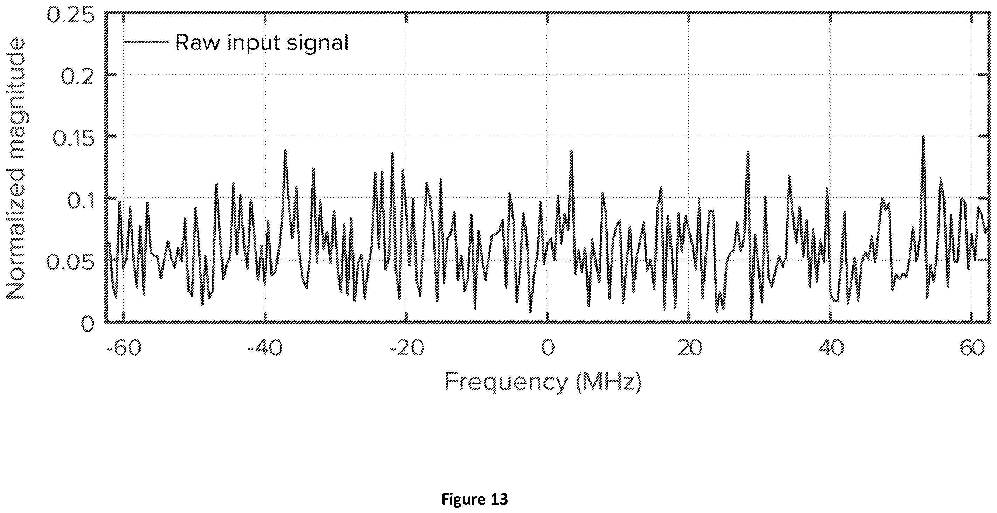

Figure 13 shows the measurement of the input signal's frequency based on the computation of a cross-spectrum after decoding the raw input signal and decimating it using a decimating finite impulse response filter. The radial velocity of the object was measured to be 2.46 m/s.

Many modifications will be apparent to those skilled in the art without departing from the scope of the present invention.

## Claims

1. A LiDAR process executed by a signal processing component (120) of a LiDAR apparatus, including:
receiving LiDAR signal data representing a signal received at an optical receiver (112) of a LiDAR apparatus and including a scattered and/or reflected portion of an optical signal transmitted by an optical transmitter (110) of the LiDAR apparatus and encoded with a known digital signal, the scattered and/or reflected portion of the transmitted optical signal having been scattered and/or reflected from an object spaced from the LiDAR apparatus by a distance, and having a Doppler shifted angular frequency due to radial motion of the object relative to the LiDAR apparatus;
processing the LiDAR signal data to generate corresponding frequency compensated signal data representing a frequency compensated signal corresponding to the received signal, but in which the Doppler shifted angular frequency has been removed and the known digital signal is encoded into the amplitude of the frequency compensated signal; and
correlating the frequency compensated signal with a single template of the known digital signal to generate a corresponding measurement of the distance of the object from the LiDAR apparatus; wherein the processing includes:
(i) processing the LiDAR signal data to generate corresponding second signal data representing a complex-conjugated and time-shifted copy of the received signal; and
(ii) processing the LiDAR signal data and the second signal data to generate the frequency compensated data by multiplying the received signal by the complex-conjugated and time- shifted copy of the received signal.

2. The process of claim 1, wherein the known digital signal is a maximal-length sequence phase-encoded in the optical signal, and the Doppler-shifted portion of the optical signal is given by: $s \left[{nT}_{s}\right] = {Ae}^{i \left({ωnT}_{s}+\frac{β}{2}c\left[{nT}_{s}\right]+θ\left[{nT}_{s}\right]\right)}$
with amplitude A, angular frequency *ω =* 2*πf*, time-varying phase *θ*[*nTₛ*]*,* and *c*[*nTₛ*]is the known digital signal encoded in phase with modulation depth *β*;
the complex-conjugated and time-shifted copy of the received signal is given by: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
where the time- shifted frequency *ωKTₛ* represents a constant phase shift, *ϕ*, relative to the unshifted signal s[n], and wherein the frequency compensated signal is given by: $q \left[{nT}_{s}\right] = {A}^{2} ⋅ c \left[{nT}_{s}\right] ⋅ c \left[\left(n-K\right){T}_{s}\right] ⋅ {e}^{iϕ}$

3. The process of claim 2, wherein the known digital signal is a pseudo-random bit sequence, and the frequency compensated signal is given by: $q \left[{nT}_{s}\right] = {A}^{2} ⋅ c \left[\left(n-M\right){T}_{s}\right] ⋅ {e}^{iϕ}$

4. The process of claim 2 or 3, including estimating the Doppler shifted angular frequency *f_{d}* according to: ${f}_{d} = \frac{{ϕF}_{s}}{2 πRK}$ where ${F}_{s} = \frac{1}{{T}_{s}}$ represents the sampling frequency used to generate the LiDAR signal data from the received optical signal.

5. The process of claim 1, wherein the known digital signal is amplitude-encoded in the optical signal, and the processing includes:
i) determining in-phase and quadrature components of the received signal; and
ii) determining the frequency compensated signal as a magnitude of a complex vector corresponding to the in-phase and quadrature components of the received signal.

6. The process of any one of claims 1 to 5, including:
encoding an optical signal with the known digital signal;
causing an optical transmitter of the LiDAR apparatus to transmit the encoded optical signal towards the object; and
receiving the signal at an optical receiver of the LiDAR apparatus.

7. A LiDAR apparatus, including:
a laser (102) to generate an optical signal;
an optical modulator (108) to encode the optical signal with a known digital signal;
an optical transmitter (110) to transmit the encoded optical signal towards an object spaced from the LiDAR apparatus by a distance;
an optical receiver (112) to receive a signal including a portion of the transmitted optical signal scattered and/or reflected from the object, the scattered and/or reflected portion of the transmitted optical signal having a Doppler shifted angular frequency due to radial motion of the object relative to the LiDAR apparatus; and
a digital signal processing component (120) configured to:
receive LiDAR signal data representing the signal received by the optical receiver;
process the LiDAR signal data to generate corresponding frequency compensated signal data representing a frequency compensated signal corresponding to the received signal, but in which the Doppler shifted angular frequency has been removed and the known digital signal is encoded into the amplitude of the frequency compensated signal; and
correlate the frequency compensated signal with a single template of the known digital signal to generate a corresponding measurement of the distance of the object from the LiDAR apparatus; wherein the processing of the LiDAR signal data includes the steps of:
(i) processing the LiDAR signal data to generate corresponding second signal data representing a complex-conjugated and time-shifted copy of the received signal; and
(ii) processing the LiDAR signal data and the second signal data to generate the frequency compensated data by multiplying the received signal by the complex-conjugated and time- shifted copy of the received signal.

8. The apparatus of claim 7, wherein the known digital signal is a maximal-length sequence phase-encoded in the optical signal, and the Doppler-shifted portion of the optical signal is given by: $s \left[{nT}_{s}\right] = {Ae}^{i \left({ωnT}_{s}+\frac{β}{2}c\left[{nT}_{s}\right]+θ\left[{nT}_{s}\right]\right)}$
with amplitude A, angular frequency *ω =* 2*πf*, time-varying phase *θ*[*nTₛ*]*,* and *c*[*nTₛ*]is the known digital signal encoded in phase with modulation depth *β*;
the complex-conjugated and time-shifted copy of the received signal is given by: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
where the time- shifted frequency *ωKTₛ* represents a constant phase shift, *ϕ*, relative to the unshifted signal *s*[*n*], and wherein the frequency compensated signal is given by: $q \left[{nT}_{s}\right] = {A}^{2} ⋅ c \left[{nT}_{s}\right] ⋅ c \left[\left(n-K\right){T}_{s}\right] ⋅ {e}^{iϕ}$

9. The apparatus of claim 8, wherein the known digital signal is a pseudo-random bit sequence, and the frequency compensated signal is given by: $q \left[{nT}_{s}\right] = {A}^{2} ⋅ c \left[\left(n-M\right){T}_{s}\right] ⋅ {e}^{iϕ}$

10. The apparatus of claim 8 or 9, wherein the digital signal processing component (120) is further configured to estimate the Doppler shifted angular frequency *f_{d}* according to: ${f}_{d} = \frac{{ϕF}_{s}}{2 πRK}$ where ${F}_{s} = \frac{1}{{T}_{s}}$ represents the sampling frequency used to generate the LiDAR signal data from the received optical signal.

11. The apparatus of claim 7, wherein the known digital signal is amplitude-encoded in the optical signal, and the processing of the LiDAR signal data includes the steps of:
i) determining in-phase and quadrature components of the received signal; and
ii) determining the frequency compensated signal as a magnitude of a complex vector corresponding to the in-phase and quadrature components of the received signal.

12. The apparatus of any one of claims 7 to 11, wherein the digital signal processing component (120) is further configured to:
cause an optical signal to be encoded with the known digital signal; and
cause the optical transmitter (110) to transmit the encoded optical signal towards the object.

## Patentansprüche

1. Ein LiDAR-Verfahren, das von einer Signalverarbeitungskomponente (120) einer LiDAR-Vorrichtung ausgeführt wird, umfassend:
Empfangen von LiDAR-Signaldaten, die ein an einem optischen Empfänger (112) einer LiDAR-Vorrichtung empfangenes Signal repräsentieren und einen gestreuten und/oder reflektierten Anteil eines optischen Signals umfassen, das von einem optischen Sender (110) der LiDAR-Vorrichtung gesendet und mit einem bekannten digitalen Signal codiert wurde, wobei der gestreute und/oder reflektierte Anteil des gesendeten optischen Signals von einem Objekt gestreut und/oder reflektiert wurde, das um eine Entfernung von der LiDAR-Vorrichtung beabstandet ist, und aufgrund einer radialen Bewegung des Objekts relativ zu der LiDAR-Vorrichtung eine Doppler-verschobene Kreisfrequenz aufweist;
Verarbeiten der LiDAR-Signaldaten, um entsprechende frequenzkompensierte Signaldaten zu erzeugen, die ein dem empfangenen Signal entsprechendes frequenzkompensiertes Signal repräsentieren, bei dem jedoch die Doppler-verschobene Kreisfrequenz entfernt wurde und das bekannte digitale Signal in die Amplitude des frequenzkompensierten Signals codiert ist; und
Korrelieren des frequenzkompensierten Signals mit einer einzelnen Vorlage des bekannten digitalen Signals, um eine entsprechende Messung der Entfernung des Objekts von der LiDAR-Vorrichtung zu erzeugen; wobei das Verarbeiten umfasst:
(i) Verarbeiten der LiDAR-Signaldaten, um entsprechende zweite Signaldaten zu erzeugen, die eine komplex konjugierte und zeitverschobene Kopie des empfangenen Signals repräsentieren; und
(ii) Verarbeiten der LiDAR-Signaldaten und der zweiten Signaldaten, um die frequenzkompensierten Daten durch Multiplizieren des empfangenen Signals mit der komplex konjugierten und zeitverschobenen Kopie des empfangenen Signals zu erzeugen.

2. Das Verfahren nach Anspruch 1, wobei das bekannte digitale Signal eine in dem optischen Signal phasencodierte Maximalfolge ist und der Doppler-verschobene Anteil des optischen Signals gegeben ist durch: $s \left[{nT}_{s}\right] = {Ae}^{i \left({ωnT}_{s}+\frac{β}{2}c\left[{nT}_{s}\right]+θ\left[{nT}_{s}\right]\right)}$
mit der Amplitude A, der Kreisfrequenz *ω =* 2*πf*, der zeitlich veränderlichen Phase *θ*[*nTₛ*]*,* und wobei *c*[*nTₛ*] das bekannte digitale Signal ist, das mit einer Modulationstiefe β in der Phase codiert ist;
wobei die komplex konjugierte und zeitverschobene Kopie des empfangenen Signals gegeben ist durch: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
wobei die zeitverschobene Frequenz *ωKTₛ* eine konstante Phasenverschiebung *ϕ* relativ zu dem unverschobenen Signal s[n] repräsentiert und wobei das frequenzkompensierte Signal gegeben ist durch: $q \left[{nT}_{s}\right] = {A}^{2} ⋅ c \left[{nT}_{s}\right] ⋅ c \left[\left(n-K\right){T}_{s}\right] ⋅ {e}^{iϕ}$

3. Das Verfahren nach Anspruch 2, wobei das bekannte digitale Signal eine pseudozufällige Bitfolge ist und das frequenzkompensierte Signal gegeben ist durch: $q \left[{nT}_{s}\right] = {A}^{2} ⋅ c \left[\left(n-M\right){T}_{s}\right] ⋅ {e}^{iϕ}$

4. Das Verfahren nach Anspruch 2 oder 3, umfassend Schätzen der Dopplerverschobenen Kreisfrequenz *f_{d}* gemäß: ${f}_{d} = \frac{{ϕF}_{s}}{2 πRK}$ wobei ${F}_{s} = \frac{1}{{T}_{s}}$ die Abtastfrequenz repräsentiert, die verwendet wird, um die LiDAR-Signaldaten aus dem empfangenen optischen Signal zu erzeugen.

5. Das Verfahren nach Anspruch 1, wobei das bekannte digitale Signal in dem optischen Signal amplitudencodiert ist und das Verarbeiten umfasst:
i) Bestimmen von In-Phase- und Quadraturkomponenten des empfangenen Signals; und
ii) Bestimmen des frequenzkompensierten Signals als einen Betrag eines komplexen Vektors, der den In-Phase- und Quadraturkomponenten des empfangenen Signals entspricht.

6. Das Verfahren nach einem der Ansprüche 1 bis 5, umfassend:
Codieren eines optischen Signals mit dem bekannten digitalen Signal;
Veranlassen eines optischen Senders der LiDAR-Vorrichtung, das codierte optische Signal in Richtung des Objekts zu senden; und
Empfangen des Signals an einem optischen Empfänger der LiDAR-Vorrichtung.

7. Eine LiDAR-Vorrichtung, umfassend:
einen Laser (102) zum Erzeugen eines optischen Signals;
einen optischen Modulator (108) zum Codieren des optischen Signals mit einem bekannten digitalen Signal;
einen optischen Sender (110) zum Senden des codierten optischen Signals in Richtung eines Objekts, das um eine Entfernung von der LiDAR-Vorrichtung beabstandet ist;
einen optischen Empfänger (112) zum Empfangen eines Signals, das einen Anteil des gesendeten optischen Signals umfasst, der von dem Objekt gestreut und/oder reflektiert wurde, wobei der gestreute und/oder reflektierte Anteil des gesendeten optischen Signals aufgrund einer radialen Bewegung des Objekts relativ zu der LiDAR-Vorrichtung eine Doppler-verschobene Kreisfrequenz aufweist; und
eine digitale Signalverarbeitungskomponente (120), die konfiguriert ist zum:
Empfangen von LiDAR-Signaldaten, die das von dem optischen Empfänger empfangene Signal repräsentieren;
Verarbeiten der LiDAR-Signaldaten, um entsprechende frequenzkompensierte Signaldaten zu erzeugen, die ein dem empfangenen Signal entsprechendes frequenzkompensiertes Signal repräsentieren, bei dem jedoch die Doppler-verschobene Kreisfrequenz entfernt wurde und das bekannte digitale Signal in die Amplitude des frequenzkompensierten Signals codiert ist; und
Korrelieren des frequenzkompensierten Signals mit einer einzelnen Vorlage des bekannten digitalen Signals, um eine entsprechende Messung der Entfernung des Objekts von der LiDAR-Vorrichtung zu erzeugen; wobei das Verarbeiten der LiDAR-Signaldaten die folgenden Schritte umfasst:
(i) Verarbeiten der LiDAR-Signaldaten, um entsprechende zweite Signaldaten zu erzeugen, die eine komplex konjugierte und zeitverschobene Kopie des empfangenen Signals repräsentieren; und
(ii) Verarbeiten der LiDAR-Signaldaten und der zweiten Signaldaten, um die frequenzkompensierten Daten durch Multiplizieren des empfangenen Signals mit der komplex konjugierten und zeitverschobenen Kopie des empfangenen Signals zu erzeugen.

8. Die Vorrichtung nach Anspruch 7, wobei das bekannte digitale Signal eine in dem optischen Signal phasencodierte Maximalfolge ist und der Doppler-verschobene Anteil des optischen Signals gegeben ist durch: $s \left[{nT}_{s}\right] = {Ae}^{i \left({ωnT}_{s}+\frac{β}{2}c\left[{nT}_{s}\right]+θ\left[{nT}_{s}\right]\right)}$
mit der Amplitude *A*, der Kreisfrequenz *ω =* 2*πf*, der zeitlich veränderlichen Phase *θ*[*nTₛ*]*,* und wobei *c*[*nTₛ*] das bekannte digitale Signal ist, das mit einer Modulationstiefe *β* in der Phase codiert ist;
wobei die komplex konjugierte und zeitverschobene Kopie des empfangenen Signals gegeben ist durch: $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
wobei die zeitverschobene Frequenz *ωKTₛ* eine konstante Phasenverschiebung *ϕ* relativ zu dem unverschobenen Signal *s*[*n*] repräsentiert und wobei das frequenzkompensierte Signal gegeben ist durch: $q \left[{nT}_{s}\right] = {A}^{2} ⋅ c \left[{nT}_{s}\right] ⋅ c \left[\left(n-K\right){T}_{s}\right] ⋅ {e}^{iϕ}$

9. Die Vorrichtung nach Anspruch 8, wobei das bekannte digitale Signal eine pseudozufällige Bitfolge ist und das frequenzkompensierte Signal gegeben ist durch: $q \left[{nT}_{s}\right] = {A}^{2} ⋅ c \left[\left(n-M\right){T}_{s}\right] ⋅ {e}^{iϕ}$

10. Die Vorrichtung nach Anspruch 8 oder 9, wobei die digitale Signalverarbeitungskomponente (120) ferner konfiguriert ist, die Doppler-verschobene Kreisfrequenz *f_{d}* gemäß Folgendem zu schätzen: ${f}_{d} = \frac{{ϕF}_{s}}{2 πRK}$ wobei ${F}_{s} = \frac{1}{{T}_{s}}$ die Abtastfrequenz repräsentiert, die verwendet wird, um die LiDAR-Signaldaten aus dem empfangenen optischen Signal zu erzeugen.

11. Die Vorrichtung nach Anspruch 7, wobei das bekannte digitale Signal in dem optischen Signal amplitudencodiert ist und das Verarbeiten der LiDAR-Signaldaten die folgenden Schritte umfasst:
i) Bestimmen von In-Phase- und Quadraturkomponenten des empfangenen Signals; und
ii) Bestimmen des frequenzkompensierten Signals als einen Betrag eines komplexen Vektors, der den In-Phase- und Quadraturkomponenten des empfangenen Signals entspricht.

12. Die Vorrichtung nach einem der Ansprüche 7 bis 11, wobei die digitale Signalverarbeitungskomponente (120) ferner konfiguriert ist zum:
Veranlassen, dass ein optisches Signal mit dem bekannten digitalen Signal codiert wird; und
Veranlassen des optischen Senders (110), das codierte optische Signal in Richtung des Objekts zu senden.

## Revendications

1. Processus lidar exécuté par un composant de traitement de signaux (120) d'un appareil lidar, comportant les étapes suivantes :
recevoir des données de signal lidar représentant un signal reçu sur un récepteur optique (112) d'un appareil lidar et comportant une partie diffusée et/ou réfléchie d'un signal optique émis par un émetteur optique (110) de l'appareil lidar et codé avec un signal numérique connu, la partie diffusée et/ou réfléchie du signal optique émis ayant été diffusée et/ou réfléchie par un objet espacé de l'appareil lidar d'une certaine distance, et ayant une fréquence angulaire à décalage Doppler due à un mouvement radial de l'objet par rapport à l'appareil lidar ;
traiter les données de signal lidar pour générer des données de signal compensées en fréquence correspondantes représentant un signal compensé en fréquence correspondant au signal reçu mais dont la fréquence angulaire à décalage Doppler a été supprimée, et le signal numérique connu est codé dans l'amplitude du signal compensé en fréquence ; et
mettre en corrélation le signal compensé en fréquence avec un modèle unique du signal numérique connu pour générer une mesure correspondante de la distance de l'objet par rapport à l'appareil lidar ; dans lequel le traitement comporte les étapes suivantes :
(i) traiter les données de signal lidar pour générer des deuxièmes données de signal correspondantes représentant une copie conjuguée complexe et décalée dans le temps du signal reçu ; et
(ii) traiter les données de signal lidar et les deuxièmes données de signal pour générer les données compensées en fréquence en multipliant le signal reçu par la copie conjuguée complexe et décalée dans le temps du signal reçu.

2. Processus selon la revendication 1, dans lequel le signal numérique connu est une séquence de longueur maximale codée en phase dans le signal optique, et la partie à décalage Doppler du signal optique est donnée par : $s \left[{nT}_{s}\right] = {Ae}^{i \left({ωnT}_{s}+\frac{β}{2}c\left[{nT}_{s}\right]+θ\left[{nT}_{s}\right]\right)}$
où l'amplitude *A*, la fréquence angulaire *ω = 2πf,* la phase variable dans le temps *θ*[*nTs*] et *c*[*nTₛ*] est le signal numérique connu codé en phase avec une profondeur de modulation *β* ;
la copie conjuguée complexe et décalée dans le temps du signal reçu est donnée par : $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
où la fréquence décalée dans le temps *ωKTs* représente un déphasage constant *ϕ* par rapport au signal non décalé *s[n],* et dans lequel le signal compensé en fréquence est donné par : $q \left[{nT}_{S}\right] = {A}^{2} ⋅ c \left[{nT}_{S}\right] ⋅ c \left[\left(n-K\right){T}_{S}\right] ⋅ {e}^{{i}_{ϕ}}$

3. Processus selon la revendication 2, dans lequel le signal numérique connu est une séquence de bits pseudo-aléatoire, et le signal compensé en fréquence est donné par : $q \left[{nT}_{S}\right] = {A}^{2} ⋅ c \left[\left(n-M\right){T}_{S}\right] ⋅ {e}^{{i}_{ϕ}}$

4. Processus selon la revendication 2 ou 3, comprenant l'estimation de la fréquence angulaire à décalage Doppler *f_{d}* selon : ${f}_{d} = \frac{{ϕF}_{s}}{2 πRK}$ où ${F}_{s} = \frac{1}{{T}_{s}}$ représente la fréquence d'échantillonnage utilisée pour générer les données de signal lidar à partir du signal optique reçu.

5. Processus selon la revendication1, dans lequel le signal numérique connu est codé en amplitude dans le signal optique, et le traitement comporte les étapes suivantes :
i) déterminer les composantes en phase et en quadrature du signal reçu ; et
ii) déterminer le signal compensé en fréquence sous la forme de la magnitude d'un vecteur complexe correspondant aux composantes en phase et en quadrature du signal reçu.

6. Processus selon l'une quelconque des revendications 1 à 5, comportant les étapes suivantes :
coder un signal optique avec le signal numérique connu ;
amener un émetteur optique de l'appareil lidar à émettre le signal optique codé vers l'objet ; et
recevoir le signal sur un récepteur optique de l'appareil lidar.

7. Appareil lidar, comportant :
un laser (102) pour générer un signal optique ;
un modulateur optique (108) pour coder le signal optique avec un signal numérique connu ;
un émetteur optique (110) pour émettre le signal optique codé vers un objet espacé de l'appareil lidar d'une certaine distance ;
un récepteur optique (112) pour recevoir un signal comportant une partie du signal optique émis diffusée et/ou réfléchie par l'objet, la partie diffusée et/ou réfléchie du signal optique émis ayant une fréquence angulaire à décalage Doppler due à un mouvement radial de l'objet par rapport à l'appareil lidar ; et
un composant de traitement de signaux (120) numérique configuré pour :
recevoir des données de signal lidar représentant le signal reçu par le récepteur optique ;
traiter les données de signal lidar pour générer des données de signal compensées en fréquence correspondantes représentant un signal compensé en fréquence correspondant au signal reçu mais dont la fréquence angulaire à décalage Doppler a été supprimée, et le signal numérique connu est codé dans l'amplitude du signal compensé en fréquence ; et
mettre en corrélation le signal compensé en fréquence avec un modèle unique du signal numérique connu pour générer une mesure correspondante de la distance de l'objet par rapport à l'appareil lidar ; dans lequel le traitement des données de signal lidar comporte les étapes suivantes :
(i) traiter les données de signal lidar pour générer des deuxièmes données de signal correspondantes représentant une copie conjuguée complexe et décalée dans le temps du signal reçu ; et
(ii) traiter les données de signal lidar et les deuxièmes données de signal pour générer les données compensées en fréquence en multipliant le signal reçu par la copie conjuguée complexe et décalée dans le temps du signal reçu.

8. Appareil selon la revendication 7, dans lequel le signal numérique connu est une séquence de longueur maximale codée en phase dans le signal optique, et la partie à décalage Doppler du signal optique est donnée par : $s \left[{nT}_{s}\right] = {Ae}^{i \left({ωnT}_{s}+\frac{β}{2}c\left[{nT}_{s}\right]+θ\left[{nT}_{s}\right]\right)}$
où l'amplitude *A*, la fréquence angulaire *ω = 2πf,* la phase variable dans le temps *θ*[*nTs*] et *c*[*nTₛ*] est le signal numérique connu codé en phase avec une profondeur de modulation *β* ;
la copie conjuguée complexe et décalée dans le temps du signal reçu est donnée par : $s * \left[\left(n-K\right){T}_{s}\right] = {Ae}^{- i \left(ω\left(n-K\right){T}_{s}+\frac{β}{2}c\left[\left(n-K\right){T}_{s}\right]+θ\left[\left(n-K\right){T}_{s}\right]\right)}$
où la fréquence décalée dans le temps *ωKTs* représente un déphasage constant *ϕ* par rapport au signal non décalé *s[n],* et dans lequel le signal compensé en fréquence est donné par : $q \left[{nT}_{S}\right] = {A}^{2} ⋅ c \left[{nT}_{S}\right] ⋅ c \left[\left(n-K\right){T}_{S}\right] ⋅ {e}^{{i}_{ϕ}}$

9. Appareil selon la revendication 8, dans lequel le signal numérique connu est une séquence de bits pseudo-aléatoire, et le signal compensé en fréquence est donné par : $q \left[{nT}_{S}\right] = {A}^{2} ⋅ c \left[\left(n-M\right){T}_{S}\right] ⋅ {e}^{{i}_{ϕ}}$

10. Appareil selon la revendication 8 ou 9, dans lequel le composant de traitement de signaux (120) numérique est en outre configuré pour estimer la fréquence angulaire à décalage Doppler *f_{d}* selon : ${f}_{d} = \frac{{ϕF}_{s}}{2 πRK}$ où ${F}_{s} = \frac{1}{{T}_{s}}$ représente la fréquence d'échantillonnage utilisée pour générer les données de signal lidar à partir du signal optique reçu.

11. Appareil selon la revendication 7, dans lequel le signal numérique connu est codé en amplitude dans le signal optique, et le traitement des données de signal lidar comporte les étapes suivantes :
i) déterminer les composantes en phase et en quadrature du signal reçu ; et
ii) déterminer le signal compensé en fréquence sous la forme de la magnitude d'un vecteur complexe correspondant aux composantes en phase et en quadrature du signal reçu.

12. Appareil selon l'une quelconque des revendications 7 à 11, dans lequel le composant de traitement de signaux (120) numérique est en outre configuré pour :
provoquer le codage d'un signal optique avec le signal numérique connu ; et
amener l'émetteur optique (110) à émettre le signal optique codé vers l'objet.
